# EUROPEAN PATENT APPLICATION

(11) **EP 4 629 271 A1**
(43) Date of publication of application: **08.10.2025**
(21) Application number: 24168308.5
(22) Date of filing: 03.04.2024
(51) Int. Cl.: H01G 11/02, H01G 11/04, H01G 11/14, H01G 11/26, H01G 11/52, H01G 11/62, H01G 11/60

(54) **VOLTAGE GENERATOR COMPRISING A PLURALITY OF NANOCHANNELS**

(71) Applicant: Georg-August-Universität Göttingen Stiftung Öffentlichen Rechts, 37073 Göttingen (DE)
(72) Inventor: Zhang, Kai, 37120 Bovenden (DE); Chen, Lizhen, 37077 Göttingen (DE)
(74) Representative: REHBERG HÜPPE + PARTNER

(57) **Abstract**

A nanofluidic voltage generator (1) comprises a plurality of nanochannels (2) extending between a first electrolyte reservoir (4) and a second electrolyte reservoir (5) in a channel main direction (6) and being delimited in at least one transverse direction (13) that is transverse to the channel main direction (6) by channel walls. The channel walls comprise at least one kind of charged functional groups at a concentration that is increasing in the channel main direction (6). A width of the nanochannels (2) between the channel walls in the at least one transverse direction (13) is in a ranged from 1 nm to 1,000 nm. An electrolyte (8) filling the first reservoir (4), the second reservoir (5), and the nanochannels (2), the electrolyte (8) includes positively charged cations (10) and negatively charged anions (9). A first electrode (14) is electrically coupled to the electrolyte in the first reservoir (4), and a second electrode (15) is electrically coupled to the electrolyte in the second reservoir (5). A compression device (12) is provided for temporarily subjecting the nanochannels (2) to a compression in the at least one transverse direction (13).

## Description

### TECHNICAL FIELD OF THE INVENTION

The present invention relates to a voltage generator.

The utilization of self-powered technology in portable and wearable electronic devices has seen a notable increase in recent years, and it is expected to further increase in the future.

### PRIOR ART

T. Zhang et al.: Recent Progress in Hybridized Nanogenerators for Energy Scavenging, iScience 23, 101689, November 20, 2020, give an overview over triboelectric, piezoelectric and pyroelectric nanogenerators, electromagnetic generators, solar cells, and electromechanical cells which are known for converting mechanical, thermal, magnetic, solar and chemical energy into electricity. The known mechanical generators relying on triboelectric and piezoelectric effects are able to provide high output voltages but suffer from their short discharging times.

T. Li et al.: Cellulose ionic conductors with high differential thermal voltage for low-grade heat harvesting, Nat. Mater. vol. 18, June 2019, p. 608-613 demonstrate a cellulosic membrane relying on sub-nanoscale confinement of ions in oxidized and aligned cellulose molecular chains to enhance selective diffusion under a thermal gradient for converting low-grade heat into useful electricity. After infiltrating electrolyte into the cellulosic membrane and applying an axial temperature gradient, the ionic conductor exhibits a thermal gradient ratio of 24 mV K⁻¹. The thermally generated voltage is attributed to effective sodium ion insertion into the charged molecular chains of the cellulosic membrane, which consists of type II cellulose, while this process does not occur in natural wood or type I cellulose. The reported membrane for selective ion diffusion, that is the ability of the cellulose membrane to selectively impregnate Na⁺ ions and to repel OH⁻ ions of an NaOH solution in equilibrium with the cellulose membrane, is composed of well-aligned cellulose nanofibers. The membrane is fabricated by a method that involves cutting natural wood perpendicular to the fiber growth direction followed by a delignification process that involves using high concentration NaOH. The formation of cellulose II in the resulting membrane leads to Na-cellulose complex formation after electrolyte infiltration. Oxidation of 2,2,6,6-tetramethylpiperidine-1-oxyl (TEMPO) enhances the negative charge density of the cellulose nanofibers, which leads to additional enhancement in the thermally generated voltage up to 24 mV K⁻¹.

Q.-Y. Wu et al.: Salinity-Gradient Power Generation with Ionized Wood Membranes, Adv. Energy Matter. 2020, 10, 1902590 describe an ionized wood membrane for converting a salinity gradient between river water and sea water into energy. The wood membrane maintains the aligned nanochannels of cellulose nanofibers derived from natural wood. The surface of the nanochannels is functionalized to positively or negatively charged by in situ modifying the hydroxyl groups on the cellulose chains to quaternary ammonium or carboxyl groups, respectively. The charged aligned nanochannels serve as nanofluidic passages for selective ion transport with opposite polarity through the wood membranes, resulting in efficient charge separation and generating an electrochemical potential difference. Specifically, positively charged wood was prepared by an etherification process, in which the hydroxyl groups of the cellulose nanofibers are substituted by positively charged quaternary ammonium. A TEMPO mediated oxidation method was applied to prepare negatively charged wood, where the hydroxyl groups are transferred to the negatively charged carboxyl groups.

T. Li et al.: A nanofluidic ion regulation membrane with aligned cellulose nanofibers, Sci. Adv. 2019; 5 (2) report a nanofluidic membrane consisting of densely packed cellulose nanofibers directly derived from wood. Numerous nanochannels are produced among an expansive array of one-dimensional cellulose nanofibers. The abundant functional groups of cellulose enable facile tuning of the surface charge density via chemical modification. The nanofiber-nanofiber spacing is tuned from about 2 to about 20 nm by structural engineering. In a KCI solution, the surface-charge-governed ionic transport region shows a high ionic conductivity plateau of about 2 mS cm⁻¹ up to 10 mM. A high surface charge density of -5.7 mC m⁻² was measured after converting the hydroxyl groups of the wood-derived cellulose nanofibers to carboxyl groups using TEMPO.

L. Huang et al.: Electricity generation across graphene oxide membranes, Materials Research Bulletin 97 (2018) 96-100, report an energy conversion method in nanochannels. Electricity is generated using the confinement of nanocapillaries within graphene oxide membranes and the mobility difference of ions. Due to the deprotonation of oxygenated functional groups which are attached to graphene oxide surfaces, the surfaces are negatively charged, resulting in a strong attractive force to cations and a significant repulsion force to anions. If a graphene oxide membrane is arranged between two reservoirs holding an electrolyte, a voltage across the membrane results. This voltage decreases with a pressure difference applied across the membrane. This is due to weakened water-ion interactions confined in graphene oxide nanochannels, which decrease the selectivity of cations and anions.

### OBJECT OF THE INVENTION

It is the object of the present invention to provide a voltage generator displaying longer discharging times than currently available mechanical generators relying on triboelectric and piezoelectric effects.

### SOLUTION

According to the present invention, the object of the invention is solved by a nanofluidic voltage generator comprising the features of independent claim 1.

Preferred embodiments of the nanofluidic voltage generator are defined in the dependent claims.

### DESCRIPTION OF THE INVENTION

The present invention relates to a voltage generator comprising a plurality of nanochannels. Thus, it may also be designated as a nanofluidic voltage generator. The nanochannels extend between a first electrolyte reservoir and a second electrolyte reservoir in a channel main direction. In at least one transverse direction that is transverse to the channel main direction, the nanochannels are delimited by channel walls. The channel walls comprise at least one kind of charged functional groups. The charged functional groups are provided at a concentration that is in some way increasing in the channel main direction. A width of the nanochannels between the channel walls in the at least one transverse direction is in a range from 0.1 nm to 1,000 nm. Further, the voltage generator comprises an electrolyte filling the first reservoir, the second reservoir, and the nanochannels. The electrolyte includes both positively charged cations and negatively charged anions. Due to the charged functional groups at the channel walls and the small width of the nanochannels between the channel walls, an electric double layer is formed in the nanochannels. This electric double layer formation results in a selective ion diffusion through the nanochannels and in that the nanochannels will predominantly be occupied by the cations or the anions of the electrolyte depending on the sign of the charge of the charged functional groups. Due to the concentration of the charged functional groups increasing in the channel main direction, the cations or the anions, respectively, when in an electrochemical equilibrium state, will also show a concentration that is increasing in the channel main direction. *Vice versa,* the concentration of the oppositely charged ions of the electrolyte will decrease in the channel main direction.

Further, the voltage generator comprises a compression device that is configured for temporally subjecting the nanochannels to a compression in the at least one transverse direction. The compression device may subject the nanochannels to a compression in all transverse directions in which the nanochannels are delimited by the channel walls. On the other hand, the compression device will be configured for not subjecting the nanochannels to a compression in any direction in which the nanochannels is not delimited by the channel walls. Particularly, the compression device will be configured for not subjecting the nanochannels to a compression in the channel main direction. The compression of the nanochannels in the at least one transverse direction in which the nanochannels are delimited by the channel walls results in a pressure difference between the interior of the nanochannels and the adjoining electrolyte reservoirs in which the electrolyte is not compressed by the compression device. Thus, the electrolyte components occupying the nanochannels are pressed out of the nanochannels into the adjoining electrolyte reservoirs. Due to the concentration of the cations and the anions increasing or decreasing towards the second electrolyte reservoir, more cations or anions will be pressed into the second or first electrolyte reservoir than into the other electrolyte reservoir. Thus, there is a charge separation resulting in an electric voltage between the two electrolyte reservoirs. Assuming, that more cations will be pressed into the second electrolyte reservoir and/or more anions will be pressed into the first electrolyte reservoir, there will be a charge separation resulting in a higher electric potential of the second electrolyte reservoir and a lower electric potential of the first electrolyte reservoir. When the compression of the nanochannels by the compression device ends, this difference in electric potential, i. e. this electric voltage, does not immediately drop to zero. Instead, the voltage only drops with the cations and anions rearranging themselves in the nanochannels to once again get into their electrochemical equilibrium state. Thus, there is ample time to exploit the voltage provided by the voltage generator.

The width of the nanochannels in the at least one transverse direction is in the nanometer range, i.e. in the sub-micrometer range of at least 0.1 nm and not more than 1,000 nm, preferably in a range from 1 nm to 100 nm. In nanochannels of such a small width, a pronounced electric double layer is formed due to the charged functional groups at the channel walls. Thus, the non-ion components of the electrolyte will not pass through the nanochannels. Further, depending on the sign of the charge of the charged functional groups at the channel walls, there is a selection whether cations or anions may diffuse through the nanochannels. There may even be cases in which oppositely charged functional groups whose concentrations increase towards different ones of the electrolyte reservoirs, only allow for a diffusion of the cations into the nanochannels from one of the reservoirs and a diffusion of the anions into the nanochannels from the other one of the reservoirs but no diffusion of neither the cations nor the anions through the entire nanochannels, i. e. between the reservoirs.

A length of the nanochannels between the first electrolyte reservoir and the second electrolyte reservoir may generally be in a range from 1 mm to 2 m. It will be understood that the voltage generated between the two electrolyte reservoirs may increase with the length of the nanochannels, but that the distances which have to be covered by the individual cations and anions when being pressed out of the nanochannels and when rearranging in the nanochannels, once the nanochannels are no longer compressed, will also increase with the length of the nanochannels. Thus, short term variations of the compression of the nanochannels may be too quick for being harvested with a voltage generator having too long nanochannels. Preferably, the length of the nanochannels will be in a range from 5 mm to 50 mm. In this range, a suitably high voltage between the two electrolyte reservoirs will be generated and drop again at a suitable temporal rate.

In the voltage generator, the nanochannels may, for example, be formed between individual fibers, between individual laminas, within individual tubes and/or within individual through holes extending in the channel main direction.

In a circumferential direction around the channel main direction, the nanochannels or the structures forming the nanochannels, i.e. the fibers, laminas or tubes, may be enclosed to close the area of the nanochannels so that the electrolyte or its ions, respectively, may only flow out of the electrolyte reservoirs into the nanochannels, and out of the nanochannels into the electrolyte reservoirs. An enclosure enclosing the plurality of the nanochannels may, for example, comprise a flexible hose, a flexible container, a hull of wax or a hull of polydimethylsiloxane (PDMS).

A material of the channel walls of the nanochannels, which may already include the charged functional groups or a precursor of the charged functional groups, or to which the charged functional groups may be attached, may be selected from a group consisting of cellulose, preferably lignocellulose, other wood-based materials, rubber, polymers, glass, carbon, and metal. Thus, fibers, between which the nanochannels are formed may, for example, be lignocellulose fibers, carbon nanotubes or metal nanofibers.

The charged functional groups at the channel walls of the nanochannels may be any charged functional groups of a sufficient chemical stability and a suitable electric charge. Preferably, the charged functional groups will be selected from a group of functional groups consisting of carboxyl groups, sulfonate groups, phosphate groups, borate groups, nitrate groups, amino groups, imidazole groups, pyrazolo groups and pyridine groups.

A maximum surface concentration of the charged functional groups determined as the resulting electric surface charge, will generally be in a range from + or - 0.1 mC·m⁻² to + or - 1,000 mC·m⁻², respectively. Preferably, the maximum surface charge will be in a range from + or - 0.5 mC·m⁻² to + or - mC·m⁻², respectively. The increase of the concentration of the charged functional groups along the nanochannels in the channel main direction may be linear, i.e. the concentration may have a constant gradient along the nanochannels. However, the gradient of the concentration may be non-constant, and the concentration may even only increase in one or more discrete steps. Further, the concentration may increase from zero or any other minimum surface concentration below the maximum surface concentration. However, preferably, the minimum surface concentration will be no more than 50 % of the maximum surface concentration.

Most preferably, a wall material of the channel walls is elastically deformable and allows for an elastic compression of the nanochannels in the at least one transverse direction. A Young's modulus of the wall material will generally be in a range from 1 kPa to 10 GPa. Preferably, the Young's modulus of the wall material is in a range from 10 kPa to 500 kPa.

Generally, the electrolyte of the voltage generator may be any electrolyte providing cations and/or anions suitable for diffusion into the nanochannels of the voltage generator. The electrolyte may be a salt solution selected from neutral salt solutions, acidic salt solutions and basic salt solutions. The salt solution may comprise metal cations or ammonium cations or non-metal cations. Typically, it will comprise non-metal anions. The solvent of the salt solution may be water or any other polar or non-polar solvent that is suitable for forming the electrolyte. More particularly, the electrolyte may be an aqueous electrolyte comprising at least one of NaCl, KCI, CsCI, MgCl₂, CaCl₂, SrCl₂, H₂SO₄, Na₂SO₄, K₂SO₄, HCl, NaOH, KOH, NH₄Cl, NH₄NO₃ and (NH₄)₂SO₄. Alternatively, the electrolyte may be an organic electrolyte like, for example, acetonitrile, propylene carbonate, dimethyl sulfoxide, a ionic liquid etc. Further, the electrolyte may be a polyelectrolyte, like, for example, a polyionic liquid, polyethylene glycol, polyethyleneimine and polyvinylidene fluoride. Further, the electrolyte may be an ionic liquid. The size and the shape of the anions and/or cations of the electrolyte will also matter. Too big and bulky anions may not be able to diffuse into the nanochannels and move out of the nanochannels at a sufficient speed even if their charge would allow their passage through the nanochannels.

A viscosity of the electrolyte at a design operation temperature of the voltage generator will be in a typical range from 0.5 mPas to 10⁵ Pas. Although, in many embodiments of the voltage generator, the complete electrolyte will not pass through the nanochannels, the viscosity of the electrolyte at the design operation temperature is to some extent indicative of the mobility of its anions and/or cations which diffuse into and move out of the nanochannels in operation of the voltage generator. The viscosity range from 0.5 mPas to 10⁵ Pas often provides for a sufficient mobility of the cations and/or anions. The design operation temperature of the voltage generator may generally be in a range from - 50°C to 100°C. Preferably, the design operation temperature is in a range from 100°C to 50°C, i.e. somewhere around room temperature. A too high operation temperature may counter-act the formation of stable electric double layers, whereas a too low temperature may reduce the viscosity of the electrolyte or the mobility of the relevant cations and/or anions, respectively.

The compression device may be configured for applying a pressure in a range from 0.1 Pa to 400 kPa to the nanochannels in the least one transverse direction. This means, that even small pressures but also rather big pressures may be converted into electric voltages by means of the voltage generator. However, it will be understood that very small pressures will only result in very small voltages, and that there will be a saturation pressure above which a further increase of the pressure will not result in a further increase of the electric voltage generated by the voltage generator. Preferably, the compression device will be configured for applying a pressure in a range from 100 Pa to 100 kPa to the nanochannels in the least one transverse direction.

Further, the compression device may be configured for applying a pressure to the nanochannels in the at least one transverse direction varying at a pressure variation frequency in a range from 0.0001 Hz to 400 Hz. Thus, the voltage generator is suitable for generating electric voltages from rather slow to medium fast pressure variations. Preferably, the compression device will be configured for a pressure variation frequency in a range from 0.001 Hz to 1 Hz, i.e. for rather slow pressure variations.

Electrodes for tapping the voltage from the voltage generator may be in direct contact with the electrolyte in the electrolyte reservoirs. However, it may be preferred to capacitively couple the electrodes to the electrolyte in the reservoirs, i. e. without providing a galvanic contact between the electrodes and the electrolyte. Such a non-galvanic capacitive coupling may avoid an electrochemical degradation of the electrodes and electrolyte.

In practice, the compression device may comprise a push-rod, a piston, a ram, a plunger or the like transferring at least one of an external movement, a varying force or a varying pressure onto the walls of the nanochannels so that the nanochannels are subjected to an alternating compression resulting in an alternating voltage between the electrodes coupled to the electrolyte in the first and second electrolyte reservoirs. The transfer of the external movement, the varying force and/or the varying pressure onto the channel walls may be implemented mechanically, i.e. the channel walls may be pressed in the at least one transverse direction by some mechanical means. In another embodiment, the channel walls are subjected to a varying pneumatic or hydraulic pressure.

In one embodiment of the voltage generator, the increasing concentration of the functional groups at the channel walls is due to an increasing chemical conversion of other functional groups at the channel walls. Such an increasing chemical conversion may be implemented by pulling fibers, laminas or tubes between which the nanochannels are formed at a certain speed out of a reactor in which the chemical conversion takes place. The fibers, laminas, tubes and the like pulled out of the reactor at first show the lowest level of chemical conversion, whereas the fibers, laminas, tubes and the like pulled out of the reactor at last show the highest level of chemical conversion. It will be understood, that in some cases pulling the material out of the reactor will not be sufficient to stop the chemical conversion. In this case, the material may be pulled out of the reactor into a neutralizing bath to stop the chemical conversion.

The voltage generator according to the present disclosure may be utilized as a charging component in a diverse range of devices such as sensors, transistors, LED lighting systems and electric fans. Further, the voltage generator may be combined with a battery, an accumulator, a capacitor or a super capacitor for storing electric energy derived from the electric voltage generated by the voltage generator.

Advantageous developments of the invention result from the claims, the description and the drawings.

The advantages of features and of combinations of a plurality of features mentioned at the beginning of the description only serve as examples and may be used alternatively or cumulatively without the necessity of embodiments according to the invention having to obtain these advantages.

The following applies with respect to the disclosure - not the scope of protection - of the original application and the patent: Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims which, however, does not apply to the independent claims of the granted patent.

The number of the features mentioned in the claims and in the description is to be understood to cover this exact number and a greater number than the mentioned number without having to explicitly use the adverb "at least". For example, if an compression device is mentioned, this is to be understood such that there is exactly one compression device or there are two compression devices or more compression devices. Additional features may be added to these features, or these features may be the only features of the respective product.

The reference signs contained in the claims are not limiting the extent of the matter protected by the claims. Their sole function is to make the claims easier to understand.

### BRIEF DESCRIPTION OF THE DRAWINGS

In the following, the invention is further explained and described with respect to preferred exemplary embodiments illustrated in the drawings.
- **Fig. 1**: schematically shows an embodiment of the voltage generator.
- **Fig. 2**: shows the occupation of nanochannels between two electrolyte reservoirs predominantly by cations in an electrochemical equilibrium state within the voltage generator of Fig. 1.
- **Fig. 3**: depicts a compression of the nanochannels between the electrolyte reservoirs.
- **Fig. 4**: illustrates a rearrangement of the cations in the nanochannels after release of the compression; and
- **Fig. 5**: is a plot of the voltage between the electrolyte reservoirs over the course of the process depicted in Fig. 2 to 4.

### DESCRIPTION OF THE DRAWINGS

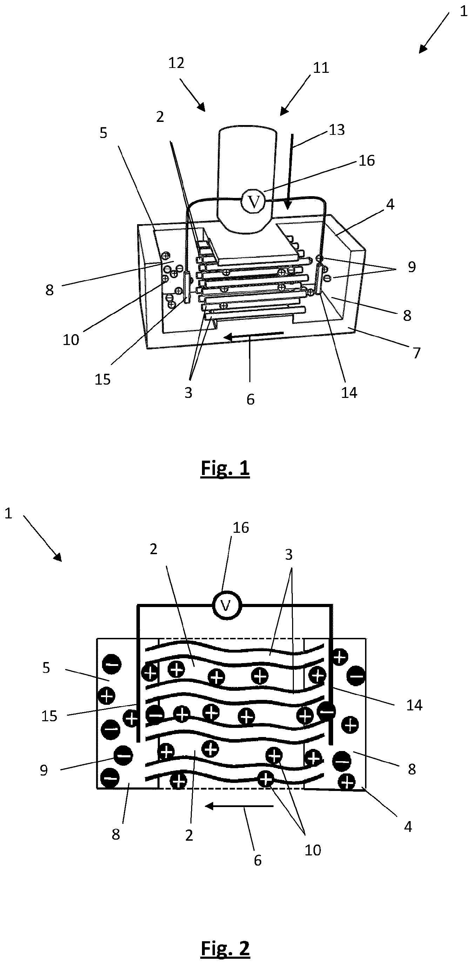

A voltage generator 1 schematically depicted in **Fig. 1** comprises a plurality of nanochannels 2 formed between fibers 3. The nanochannels 2 extend between a first electrolyte reservoir 4 and a second electrolyte reservoir 5 in a channel main direction 6. The bundle of the fibers 3 and the nanochannels formed between them are enclosed by an enclosure or envelopment 7 which is made of PDSM, here. The electrolyte reservoirs 4 and 5 may be provided in cavities formed in the PDSM. The electrolyte reservoirs 4 and 5 are filed with an electrolyte 8 comprising anions 9 and cations 10. A movement or diffusion of the anions 9 and the cations 10 through the nanochannels 2 is strongly influenced by charged functional groups provided at the surfaces of the fibers 3, i.e. at channel walls delimiting the nanochannels transverse to the channel main direction 6. In the voltage generator 1, the surface concentration of these charged functional groups increases along the nanochannels 2 in the channel main direction 6 from the first electrolyte reservoir 4 towards the second electrolyte reservoir 5. In an embodiment, the charged functional groups are negatively charged carboxyl groups which may be obtained by TEMPO mediated oxidation of hydroxyl groups present at the surface of delignified cellulose fibers obtained from wood. In the voltage generator 1, the arrangement of the nanofibers 3 with the nanochannels 2 formed between them may be basically the same as in the original wood. Further, Fig. 1 depicts a plunger 11 of a compression device 12. The plunger 11 is configured to be pressed in a transverse direction 13 onto the enclosure 7 to compress the nanochannels 2 in this transverse direction 13. This compression results in an electric voltage between the electrolyte reservoirs 4 and 5 which can be measured between a first electrode 14 coupled to the electrolyte 8 in the first electrolyte reservoir 4 and a second electrode 15 coupled to the electrolyte 8 in the second electrolyte reservoir 5 by means of a voltmeter 16 electrically connected between the electrodes 14 and 15.

**Fig. 2** even more schematically than Fig. 1 depicts the components of the voltage generator 1 according to Fig. 1 except of the enclosure 7 and the plunger 11 of the compression device 12. Due to the increasing concentration of the negatively charged functional groups at the fibers 3 delimiting the nanochannels 2, the nanochannels 2 are predominantly occupied by the cations 10. Further, the concentration of the cations 10 in the nanochannels 2 also increases in the channel main direction 6 in the electrochemical equilibrium state depicted in Fig. 2.

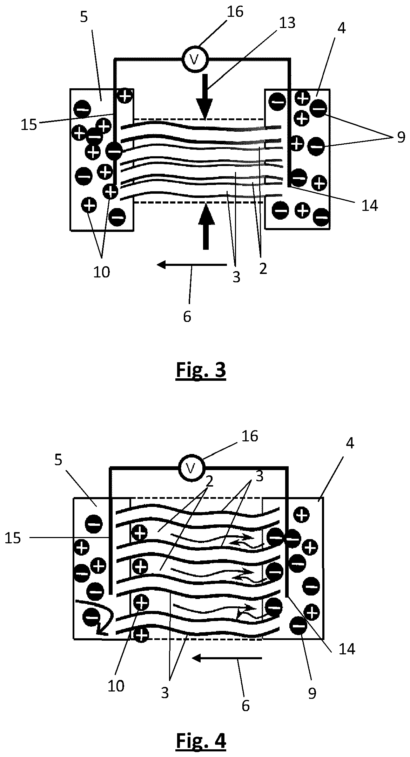

When the nanochannels 2 are compressed in the transverse direction 13, the cations 10 are pressed or expelled out of the nanochannels 2 between the fibers 3 into the adjoining electrolyte reservoirs 4 and 5, see **Fig. 3****.** Due to their concentration in the nanochannels 2 increasing in the channel main direction 6 in the electrochemical equilibrium according to Fig. 2, more cations 10 will get into the second electrolyte reservoir 5 than into the first electrolyte reservoir 4 due to the compression of the nanochannels 2. Thus, the voltmeter will register a higher electric potential of the second electrode 15 as compared to the first electrode 14 in Fig. 3, i.e. a positive voltage.

When the compression in the transverse direction 13 is released, the cations 10 will rearrange themselves by diffusing back into the nanochannels 2. This results in a drop of the voltage between the electrodes 15 and 14 back to its initial value, once the electrochemical equilibrium according to Fig. 2 has been reached again. Whereas the description of the Fig. 2 to **Fig. 4** has been focused on the cations 10, there will also be a similar reciprocal movement of the anions 9 out of the nanochannels 2 and back into the nanochannels 2 again, at least, if the negatively charged functional groups at the fibers 3 allow for a diffusion of the anions 9 into the nanochannels 2. This may, for example, be the case close to the first electrolyte reservoir 4 due to the low concentration of the charged functional groups at the fibers 3, here. Upon compression of the nanochannels 2, these anions will be pressed back into the first electrolyte reservoir 14 and, thus, contribute to the charge separation resulting in the voltage between the electrodes 15 and 14.

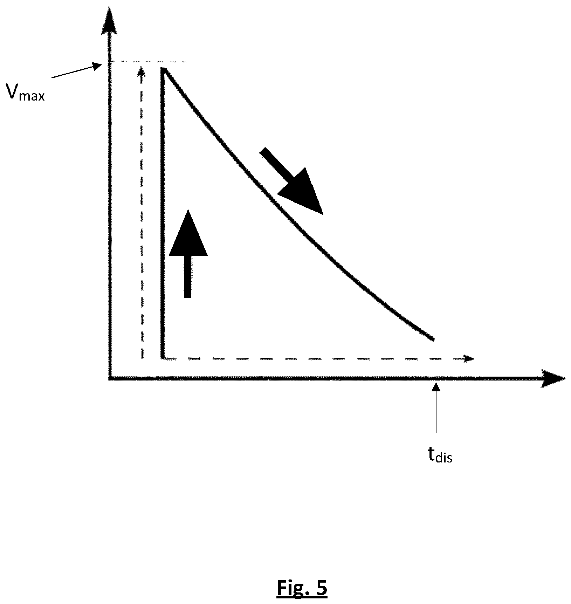

**Fig. 5** shows the course of an out voltage of the voltage generator 1 over the time starting from the electrochemical equilibrium according to Fig. 2. 2. A maximum output voltage Vₘₐₓ between the electrodes 14 and 15 is reached upon the compression of the nanochannels according to Fig. 3. This maximum output voltage Vₘₐₓ will remain as long as the nanochannels remain compressed and as long as no current is drawn from the voltage generator 1. Once the compression is released, the voltage drops to its initial value over a discharge time t_{dis} defined by the mobility of the cations 10 and anions 9 in rearranging themselves in the nanochannels 2 according to Fig. 4.

With a length of the fibers 3 and the nanochannels 2 between the electrolyte reservoirs 4 and 5 of 30 mm and with an increase of the concentration of the negatively charged functional groups in the channel main direction from close to zero to about 0.8 mmol/g of the nanofibers, and with an aqueous KCI-solution of 0.1 M used as the electrolyte, a maximum output voltage of about 10 V was obtained at pressure onto the nanochannels in the transverse direction 13 of about 20 kPa. The released time, i.e. the time over which the voltage decreases back to its initial value was in the order of 700 s. Both the maximum output voltage and the release time strongly depend on the composition of the electrolyte and the formation of the nanochannels.

### LIST OF REFERENCE NUMERALS

- 1: voltage generator
- 2: nanochannel
- 3: fiber
- 4: first electrolyte reservoir
- 5: second electrolyte reservoir
- 6: channel main direction
- 7: enclosure
- 8: electrolyte
- 9: anion
- 10: cation
- 11: plunger
- 12: compression device
- 13: transverse direction
- 14: first electrode
- 15: second electrode
- 16: voltmeter
- Vₘₐₓ: maximum output voltage
- t_{dis}: discharge time

## Claims

1. Voltage generator (1) comprising
- a plurality of nanochannels (2) extending between a first electrolyte reservoir (4) and a second electrolyte reservoir (5) in a channel main direction (6) and being delimited in at least one transverse direction (13) that is transverse to the channel main direction (6) by channel walls, the channel walls comprising at least one kind of charged functional groups at a concentration that is increasing in the channel main direction (6), a width of the nanochannels (2) between the channel walls in the at least one transverse direction (13) being in a ranged from 0.1 nm to 1,000 nm;
- an electrolyte (8) filling the first reservoir (4), the second reservoir (5), and the nanochannels (2), the electrolyte (8) including positively charged cations (10) and negatively charged anions (9);
- a first electrode (14) electrically coupled to the electrolyte in the first reservoir (4), and a second electrode (15) electrically coupled to the electrolyte in the second reservoir (5); and
- a compression device (12) configured for temporarily subjecting the nanochannels (2) to a compression in the at least one transverse direction (13).

2. Voltage generator (1) of claim 1, **wherein** the width of the nanochannels (2) in the at least one transverse direction (13) is in a range from 1 nm to 100 nm.

3. Voltage generator (1) of any of the preceding claims, **wherein** a length of the nanochannels (2) between the first electrolyte reservoir (4) and the second electrolyte reservoir (5) is in a range from 1 mm to 2 m, preferably in a range from 5 mm to 50 mm.

4. Voltage generator (1) of any of the preceding claims, **wherein** the nanochannels (2) are formed
- between individual fibers (3) and/or
- between individual laminas and/or
- within individual tubes and/or
- within individual through holes
extending in the channel main direction (6).

5. Voltage generator (1) of any of the preceding claims, **wherein** the plurality of the nanochannels (2), in a circumferential direction around the channel main direction (6), are enclosed by at least one of
- a flexible hose;
- a flexible container;
- a hull of wax;
- a hull of polydimethylsiloxane (PDMS).

6. Voltage generator (1) of any of the preceding claims, **wherein** a material of the channel walls is selected from a group consisting of
- cellulose, preferably lignocellulose,
- other wood-based materials than lignocellulose,
- rubber,
- polymers,
- glass,
- carbon, and
- metal.

7. Voltage generator (1) of any of the preceding claims, **wherein** the charged functional groups are selected from a group of functional groups consisting of
- carboxyl groups,
- sulfonate groups,
- phosphate groups,
- borate groups,
- nitrate groups,
- amino groups,
- imidazole groups,
- pyrazolo groups, and
- pyridine groups.

8. Voltage generator (1) of any of the preceding claims, **wherein** a maximum surface concentration of the charged functional groups is
- in a range from + 0.1 mC·m⁻² to + 1,000 mC·m⁻², preferably in a range from + 0.5 mC·m⁻² to + 8 mC·m⁻², or
- in a range from - 0.1 mC·m⁻² to - 1,000 mC·m⁻², preferably in a range from - 0.5 mC·m⁻² to - 8 mC·m⁻².

9. Voltage generator (1) of any of the preceding claims, **wherein** a wall material of the channel walls is elastically deformable allowing for an elastic compression of the nanochannels (2) in the at least one transverse direction (13), wherein, optionally, a Young's modulus of the wall material is in a range from 1 kPa to 10 GPa and preferably in a range from 10 kPa to 500 kPa.

10. Voltage generator (1) of any of the preceding claims, **wherein** the electrolyte is selected from
- aqueous electrolytes including NaCl, KCI, CsCI, MgCl₂, CaCl₂, SrCl₂, H₂SO₄, Na₂SO₄, K₂SO₄, HCl, NaOH, KOH, NH₄Cl, NH₄NO₃ and (NH₄)₂SO₄,
- organic electrolytes including acetonitrile, propylene carbonate, dimethyl sulfoxide and ionic liquids, and
- polymer electrolytes including polyionic liquids, polyethylene glycol, and polyethylenimine and polyvinylidene fluoride.

11. Voltage generator (1) of any of the preceding claims, **wherein** a viscosity of the electrolyte at a design operation temperature of the voltage generator (1) is in a range from 0.5 mPas to 10⁵ Pas, preferably in the range from 1 Pas to 10⁴ Pas, wherein, optionally, the design operation temperature is in a range from -50°C to 100°C, preferably in a range from 10°C to 50°C.

12. Voltage generator (1) of any of the preceding claims, **wherein** the compression device is configured for applying a pressure in a range from 0.1 Pa to 400 kPa, preferably in a range from 100 Pa to 100 kPa, to the nanochannels (2) in the at least one transverse direction (13).

13. Voltage generator (1) of any of the preceding claims, **wherein** the compression device is configured for applying a pressure to the nanochannels (2) in the at least one transverse direction (13) varying at a pressure variation frequency in a range from 0.0001 Hz to 400 Hz, preferably in a range from 0.001 Hz to 1 Hz.

14. Voltage generator (1) of any of the preceding claims, **wherein** the electrodes (14, 15) are capacitively coupled to the electrolyte in the reservoirs (4, 5).

15. Voltage generator (1) of any of the preceding claims, **wherein** the increasing concentration of the functional groups at the channel walls is due to an increasing chemical conversion of other functional groups at the channel walls.
